# EUROPEAN PATENT APPLICATION

(11) **EP 4 744 814 A1**
(43) Date of publication of application: **20.05.2026**
(21) Application number: 25768574.3
(22) Date of filing: 05.03.2025
(51) Int. Cl.: B23K 26/16, B23K 37/04, B23K 26/082, B23K 26/21, H01M 50/531

(54) **APPARATUS FOR MANUFACTURING SECONDARY BATTERY**

(30) Priority: 07.03.2024 KR 20240032305
(71) Applicant: LG Energy Solution, Ltd., Seoul 07335 (KR)
(72) Inventor: LEE, Seong Yeon, Daejeon 34122 (KR)
(74) Representative: Goddar, Heinz J.
(86) International application number: PCT/KR2025/002897
(87) International publication number: WO 2025/188055

(57) **Abstract**

Provided according to exemplary embodiments is an apparatus for manufacturing a secondary battery. The apparatus comprises: a first masking jig that presses on a first surface of a lead-tab assembly of a battery cell, and comprises a first opening exposing the first surface; a first spatter adsorption device attached to the first masking jig; and a scanner head for irradiating the lead-tab assembly with laser beams to fuse the former.

## Description

### TECHNICAL FIELD

The present disclosure relates to a device for manufacturing a secondary battery.

This application claims the benefit of Korean Patent Application No. 10-2024-0032305, filed on March 7, 2024, the disclosure of which is incorporated herein by reference.

### BACKGROUND

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

To keep up with the rapid growth in demand for secondary batteries for mobility, cell manufacturers are facing huge capital expenditures. To maximize the return on capital invested, companies are looking to increase productivity per line, and research is ongoing to improve yields and increase productivity.

### SUMMARY

### TECHNICAL PROBLEM

The technical challenge of the present disclosure is to provide a productive device for manufacturing a secondary battery

### TECHNICAL SOLUTION

According to exemplary embodiments of the present disclosure to address the above challenges, a device for manufacturing a secondary battery is provided. The device includes: a first masking jig for pressing a first surface of a lead-tab coupling of a battery cell, and including a first opening exposing the first surface; a first spatter adsorption device coupled to the first masking jig; and a scanner head configured to irradiate a laser beam onto the lead-tab coupling to melt the lead-tab coupling.

The first spatter adsorption device is configured to apply a first magnetic field to the first opening.

The strength of the first magnetic field in the center portion of the first opening is different from the strength of the first magnetic field in the edge portion of the first opening.

The strength of the first magnetic field in the center portion of the first opening is smaller than the strength of the first magnetic field in the edge portion of the first opening.

The first spatter adsorption device includes first and second magnetic field generating rods configured to generate the first magnetic field.

The direction of a first current applied to the first magnetic field generating rod is opposite to the direction of a second current applied to the second magnetic field generating rod.

At the center of the first opening, a magnetic field generated by the first magnetic field generating rod is offset by a magnetic field generated by the second magnetic field generating rod.

The device further includes: a second masking jig for pressing a second surface of the lead-tab coupling opposite the first surface of the lead-tab coupling, and comprising a second opening exposing the second surface; and a second spatter adsorption device coupled to the second masking jig.

The second spatter adsorption device is configured to apply a second magnetic field to the second opening.

The strength of the second magnetic field in the center portion of the second opening is different from the strength of the second magnetic field in the edge portion of the second opening.

The strength of the second magnetic field in the center portion of the second opening is smaller than the strength of the second magnetic field in the edge portion of the second opening.

The second spatter adsorption device comprises third and fourth magnetic field generating rods configured to generate the second magnetic field.

The direction of a third current applied to the third magnetic field generating rod is opposite to the direction of a fourth current applied to the fourth magnetic field generating rod.

At the center of the second opening, a magnetic field generated by the third magnetic field generating rod is offset by a magnetic field generated by the fourth magnetic field generating rod.

According to exemplary embodiments, a secondary battery manufacturing device is provided. The device includes: a first masking jig for pressing a first surface of a lead-tab coupling of a battery cell, and including a first opening exposing the first surface; a second masking jig for pressing a second surface of the lead-tab coupling opposite the first surface of the lead-tab coupling, and including a second opening exposing the second surface; a second spatter adsorption device coupled to the second masking jig; and a scanner head configured to irradiate a laser beam onto the first surface of the lead-tab coupling to melt the lead-tab coupling.

The second spatter adsorption device is configured to apply a second magnetic field to the second opening.

The strength of the second magnetic field in the center portion of the second opening is different from the strength of the second magnetic field in the edge portion of the second opening.

The strength of the second magnetic field in the center portion of the second opening is smaller than the strength of the second magnetic field in the edge portion of the second opening.

The second spatter adsorption device includes third and fourth magnetic field generating rods configured to generate the second magnetic field.

The direction of a third current applied to the third magnetic field generating rod is opposite to the direction of a fourth current applied to the fourth magnetic field generating rod.

At the center of the second opening, a magnetic field generated by the third magnetic field generating rod is offset by a magnetic field generated by the fourth magnetic field generating rod.

### ADVANTAGEOUS EFFECTS

The secondary battery manufacturing device according to exemplary embodiments of the present disclosure includes a spatter adsorption device configured to adsorb spatter generated during welding of the electrode-tab coupling. Accordingly, maintenance cycles of the secondary battery manufacturing device, such as cleaning cycles, may be extended, and throughput may be increased.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### BRIEF DESCRIPTION OF THE DRAWINGS

FIG. 1 is a diagram illustrating a secondary battery manufacturing device, according to exemplary embodiments.
FIG. 2 is a diagram illustrating the effectiveness of a secondary battery manufacturing device, according to exemplary embodiments.
FIG. 3 is a diagram illustrating a secondary battery manufacturing device, according to another exemplary embodiment.

### BEST MODE FOR CARRYING OUT THE INVENTION

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

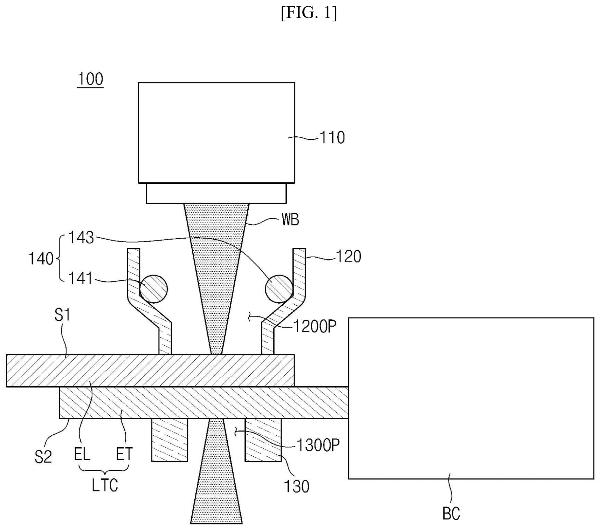

FIG. 1 is a diagram illustrating a secondary battery manufacturing device, according to exemplary embodiments.

Referring to FIG. 1, the secondary battery manufacturing device 100 may include a scanner head 110, a first masking jig 120, a second masking jig 130, and a first spatter adsorption device 140.

The secondary battery manufacturing device 100 may be configured to process an electrode-tab coupling (LTC) of a battery cell (BC). The secondary battery manufacturing device 100 may be configured to perform laser welding. The secondary battery manufacturing device 100 may be configured to weld the electrode tabs ET and electrode leads EL of the electrode-tab coupling (LTC) of the battery cell (BC). The welding by the welding beam WB may be a keyhole weld. The welding of the electrode tab ET and the electrode lead EL may include probing the welding beam WB along the line of the intended weld in a helical shape.

The electrode lead EL may be an output terminal of a battery cell BC. The battery cell BC may include a case, electrode assembly, electrolyte, and electrode leads EL. An electrode tab ET may be connected to the electrode assembly. The case may be one of a pouch case, a cylindrical case, and a prismatic case. The electrode assembly may be one of a jelly-roll type and a stack-type. The jelly-roll type electrode assembly may include a winding structure of a positive electrode, a negative electrode, and a separator interposed therebetween. The stack-type electrode assembly may include a plurality of positive electrodes and a plurality of negative electrodes stacked in sequence, and a plurality of separators interposed therebetween.

As the energy density of the battery cell BC increases, the electrode leads EL and electrode tabs ET may be coupled via pre-welding using ultrasonics and main welding using a laser beam. Accordingly, the electrode-tab coupling LTC, prior to being processed by the secondary battery manufacturing device 100, the electrode leads EL and electrode tabs ET may be coupled by methods such as, for example, ultrasonic welding. However, without limitation, the electrode leads EL and electrode tabs ET of the electrode-tab coupling LTC may not be processed by a pre-welding process and may comprise a laminated structure that is not welded together.

The scanner head 110 may be coupled to, or include, a beam source. The beam source may be a laser (Light Amplification by Stimulated Emission of Radiation) device. The beam source may be configured to generate a welding beam WB. The welding beam WB may be a laser beam. According to exemplary embodiments, the welding beam WB may be near infrared. According to exemplary embodiments, the wavelength of the welding beam WB may be in the range of about 750 nm to about 2500 nm. According to exemplary embodiments, the wavelength of the welding beam WB may be about 1070 nm.

In one example, the beam source may be a solid-state laser device, such as a semiconductor laser device, an Nd: YAG laser device, a Ti-Sapphire laser device, or a fiber laser device. In another example, the beam source may be a liquid laser, such as a pigmented laser device. In another example, the beam source may be a gaseous laser device, such as a helium-neon laser, a carbon dioxide laser, an excimer laser, or the like.

The welding beam WB generated by the beam source may be delivered to the scanner head 110. According to exemplary embodiments, the welding beam WB may be delivered to the scanner head 110 via any one of free space optics, optical integrated circuits, and fiber optics.

The first masking jig 120 may be configured to pressurize the first surface S1 of the electrode-tab coupling LTC. The first masking jig 120 may include a first opening 120OP that exposes the first surface S1 of the electrode-tab coupling LTC.

The second masking jig 130 may be configured to pressurize the second surface S2 of the electrode-tab coupling LTC. The second masking jig 130 may include a second opening 130OP that exposes the second surface S2 of the electrode-tab coupling LTC.

While the electrode-tab coupling LTC is being pressurized by the first and second masking jigs 120, 130, the contact between the electrode lead EL and the electrode tab ET is maintained while the electrode-tab coupling LTC is being processed by the welding beam WB, which can prevent migration between the electrode lead EL and the electrode tab ET, and can improve the reliability of secondary battery manufacturing.

As a non-limiting example, the first and second openings 120OP, 130OP may have an oblong planar shape. The first opening 120OP may expose a region to be welded on the first surface S1 of the electrode-tab coupling LTC, and the second opening 130OP may expose a region to be welded on the second surface S2 of the electrode-tab coupling LTC.

According to exemplary embodiments, the first spatter adsorption device 140 may be coupled to the first masking jig 120. According to exemplary embodiments, the first spatter adsorption device 140 may be within the first opening 120OP of the first masking jig 120.

The first spatter adsorption device 140 may include a first magnetic field generating rod 141 and a second magnetic field generating rod 143. The first spatter adsorption device 140 may be configured to apply a magnetic field to the first opening 1200OP. The magnetic field applied to the first opening 120OP by the first spatter adsorption device 140 may be referred to as the first magnetic field.

As used herein, horizontal and vertical are defined relative to the welding beam WB. A direction substantially parallel to the direction in which the welding beam WB advances toward the lead-tab coupling LTC is referred to as the vertical direction, and a direction substantially perpendicular to the direction in which the welding beam WB advances toward the lead-tab coupling LTC is referred to as the horizontal direction.

According to exemplary embodiments, a first current may be applied to the first magnetic field generating rod 141 and a second current may be applied to the second magnetic field generating rod 143. Accordingly, the first and second magnetic field generating rods 141, 143 may be configured to apply a magnetic field induced by the first and second currents to the first opening 1200OP.

Here, in the center portion of the first opening 120OP, the direction of the magnetic field generated by the first magnetic field generating rod 141 may be opposite to the direction of the magnetic field generated by the second magnetic field generating rod 143. In the center portion of the first opening 120OP, the magnetic field strength generated by the first magnetic field generating rod 141 may be substantially the same as the magnetic field strength generated by the second magnetic field generating rod 143.

According to exemplary embodiments, the strength of the first magnetic field at the center portion (more specifically, the horizontal center portion) of the first opening 120OP may be different from the strength of the first magnetic field at the edge portion of the first opening 1200OP. According to exemplary embodiments, the strength of the first magnetic field at the center portion (more specifically, the horizontal center portion) of the first opening 120OP may be smaller than the strength of the first magnetic field at the edge portion of the first opening 1200OP. According to exemplary embodiments, in the center portion of the first opening 120OP, the magnetic field generated by the first magnetic field generating rod 141 may offset the magnetic field generated by the second magnetic field generating rod 143.

Here, the edge portion of the first opening 120OP may be a horizontally spaced apart portion from the center portion of the first opening 1200OP. More specifically, the edge portion of the first opening 120OP may be a portion spaced apart from the center portion of the first opening 120OP in the direction of the spacing of the first and second magnetic field generating rods 141, 143.

According to exemplary embodiments, a non-zero first magnetic field at the center of the first opening 120OP may deflect the welding beam WB, thereby reducing the straightness of the welding beam WB. If the straightness of the welding beam is compromised, the welding beam may be irradiated at a different portion of the weld line than the pre-designed weld line, which may compromise the reliability of the secondary battery manufacturing. According to exemplary embodiments, even though a first magnetic field is applied to the first opening 120OP by the first spatter adsorption device 140, at the center portion of the first opening 120OP, the magnetic field generated by the first magnetic field generating rod 141 and the magnetic field generated by the second magnetic field generating rod 143 may cancel each other out, or the strength of the first magnetic field may be relatively reduced, which may improve the reliability of secondary battery manufacturing.

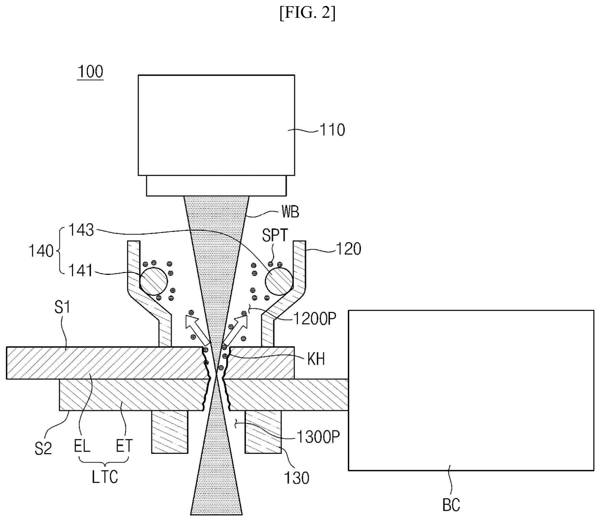

FIG. 2 is a diagram to illustrate the effectiveness of a secondary battery manufacturing device 100 according to exemplary embodiments.

Referring to FIG. 2, the weld by the welding beam WB may be a keyhole weld, and a keyhole KH may be formed in the lead-tab coupling LTC by irradiation of the welding beam WB. Spatter SPT may be generated from the keyhole KH.

If spatters SPTs adhere to the first masking jig 120, the reliability of processing by the welding beam WB may be compromised, and cleaning of the first masking jig 120 is required when the level of contamination of the first masking jig 120 exceeds a threshold condition. Typically, the cleaning intervals of the first masking jig 120 are relatively short compared to the maintenance intervals of other elements (e.g., the replacement interval of the oscillator), which contributes to poor throughput in secondary battery manufacturing.

According to exemplary embodiments, the first spatter adsorption device 140 may be configured to adsorb spatters SPTs. The first spatter adsorption device 140 may prevent, or otherwise mitigate, the adhesion of spatters to the first masking jig 120. Accordingly, the cleaning intervals of the first masking jig 120 can be extended, and the throughput of secondary battery manufacturing can be increased.

### (Second embodiment)

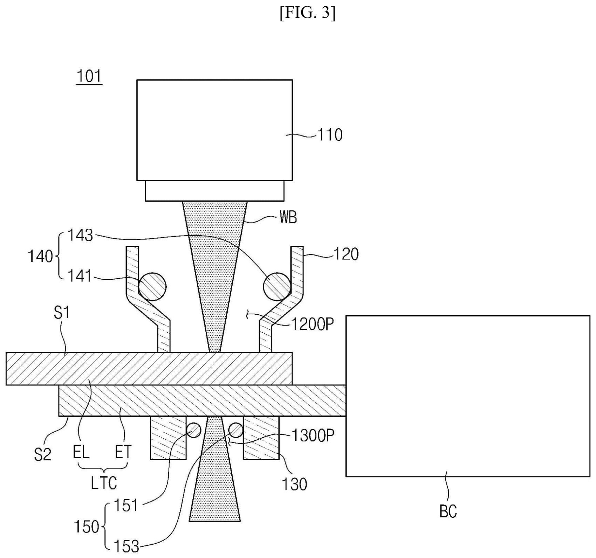

FIG. 3 is a diagram to illustrate a secondary battery manufacturing device 101, according to exemplary embodiments.

Referring to FIG. 3, the secondary battery manufacturing device 101 may include a scanner head 110, a first masking jig 120, a second masking jig 130, a first spatter adsorption device 140, and a second spatter adsorption device 150.

The scanner head 110, the first masking jig 120, the second masking jig 130, and the first spatter adsorption device 140 are substantially the same as described with reference to FIG. 1, and thus duplicative description of them is omitted.

According to exemplary embodiments, the second spatter adsorption device 150 may be coupled to the second masking jig 130. According to exemplary embodiments, the second spatter adsorption device 150 may be within the second opening 130OP of the second masking jig 130.

The second spatter adsorption device 150 may include a third magnetic field generating rod 151 and a fourth magnetic field generating rod 153. The second spatter adsorption device 150 may be configured to apply a magnetic field to the second opening 130OP. The magnetic field applied to the second opening 130OP by the second spatter adsorption device 150 may be referred to as a second magnetic field.

According to exemplary embodiments, a third current may be applied to the third magnetic field generating rod 151 and a fourth current may be applied to the fourth magnetic field generating rod 153. Accordingly, the third and fourth magnetic field generating rods 151, 153 may be configured to apply a magnetic field induced by the third and fourth currents to the second opening 130OP.

In this case, in the center portion of the second opening 130OP, the direction of the magnetic field generated by the third magnetic field generating rod 151 may be opposite to the direction of the magnetic field generated by the fourth magnetic field generating rod 153. In the center portion of the second opening 130OP, the magnetic field strength generated by the third magnetic field generating rod 151 may be substantially the same as the magnetic field strength generated by the fourth magnetic field generating rod 153.

According to exemplary embodiments, the strength of the second magnetic field at the center portion of the second opening 130OP may be different from the strength of the second magnetic field at the edge portion of the second opening 130OP. According to exemplary embodiments, the strength of the second magnetic field in the center portion of the second opening 130OP may be smaller than the strength of the second magnetic field in the edge portion of the second opening 130OP. According to exemplary embodiments, in the center portion of the second opening 130OP, the magnetic field generated by the third magnetic field generating rod 151 may offset the magnetic field generated by the fourth magnetic field generating rod 153. The definitions of the center portion and the edge portion of the second opening 130OP follow substantially the same manner as those of the first opening 120OP, and thus duplicate descriptions of them are omitted.

According to exemplary embodiments, the non-zero second magnetic field at the center portion of the second opening 130OP may deflect the welding beam WB, thereby reducing the straightness of the welding beam WB. If the straightness of the welding beam is compromised, the welding beam may be irradiated at a different location than the pre-designed weld line, which may compromise the reliability of the secondary battery manufacturing.

According to exemplary embodiments, despite the application of a second magnetic field by the second spatter adsorption device 150 to the second opening 130OP, in the center portion of the second opening 130OP, the magnetic field generated by the third magnetic field generating rod 151 and the magnetic field generated by the fourth magnetic field generating rod 153 cancel each other out, or the strength of the second magnetic field is relatively reduced, which can improve the reliability of secondary battery manufacturing.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A secondary battery manufacturing device comprising:
a first masking jig for pressing a first surface of a lead-tab coupling of a battery cell, and comprising a first opening exposing the first surface;
a first spatter adsorption device coupled to the first masking jig; and
a scanner head configured to irradiate a laser beam onto the lead-tab coupling to melt the lead-tab coupling.

2. The secondary battery manufacturing device of claim 1, wherein
the first spatter adsorption device is configured to apply a first magnetic field to the first opening.

3. The secondary battery manufacturing device of claim 2, wherein
the strength of the first magnetic field in the center portion of the first opening is different from the strength of the first magnetic field in the edge portion of the first opening.

4. The secondary battery manufacturing device of claim 2, wherein
the strength of the first magnetic field in the center portion of the first opening is smaller than the strength of the first magnetic field in the edge portion of the first opening.

5. The secondary battery manufacturing device of claim 2, wherein
the first spatter adsorption device comprises first and second magnetic field generating rods configured to generate the first magnetic field.

6. The secondary battery manufacturing device of claim 5, wherein
the direction of a first current applied to the first magnetic field generating rod is opposite to the direction of a second current applied to the second magnetic field generating rod.

7. The secondary battery manufacturing device of claim 5, wherein
at the center of the first opening, a magnetic field generated by the first magnetic field generating rod is offset by a magnetic field generated by the second magnetic field generating rod.

8. The secondary battery manufacturing device of claim 1, further comprising:
a second masking jig for pressing a second surface of the lead-tab coupling opposite the first surface of the lead-tab coupling, and comprising a second opening exposing the second surface; and
a second spatter adsorption device coupled to the second masking jig.

9. The secondary battery manufacturing device of claim 8, wherein
the second spatter adsorption device is configured to apply a second magnetic field to the second opening.

10. The secondary battery manufacturing device of claim 9, wherein
the strength of the second magnetic field in the center portion of the second opening is different from the strength of the second magnetic field in the edge portion of the second opening.

11. The secondary battery manufacturing device of claim 9, wherein
the strength of the second magnetic field in the center portion of the second opening is smaller than the strength of the second magnetic field in the edge portion of the second opening.

12. The secondary battery manufacturing device of claim 9, wherein
the second spatter adsorption device comprises third and fourth magnetic field generating rods configured to generate the second magnetic field.

13. The secondary battery manufacturing device of claim 12, wherein
the direction of a third current applied to the third magnetic field generating rod is opposite to the direction of a fourth current applied to the fourth magnetic field generating rod.

14. The secondary battery manufacturing device of claim 12, wherein
at the center of the second opening, a magnetic field generated by the third magnetic field generating rod is offset by a magnetic field generated by the fourth magnetic field generating rod.

15. A secondary battery manufacturing device comprising:
a first masking jig for pressing a first surface of a lead-tab coupling of a battery cell, and comprising a first opening exposing the first surface;
a second masking jig for pressing a second surface of the lead-tab coupling opposite the first surface of the lead-tab coupling, and comprising a second opening exposing the second surface;
a second spatter adsorption device coupled to the second masking jig; and
a scanner head configured to irradiate a laser beam onto the first surface of the lead-tab coupling to melt the lead-tab coupling.

16. The secondary battery manufacturing device of claim 15, wherein
the second spatter adsorption device is configured to apply a second magnetic field to the second opening.

17. The secondary battery manufacturing device of claim 16, wherein
the strength of the second magnetic field in the center portion of the second opening is different from the strength of the second magnetic field in the edge portion of the second opening.

18. The secondary battery manufacturing device of claim 16, wherein
the strength of the second magnetic field in the center portion of the second opening is smaller than the strength of the second magnetic field in the edge portion of the second opening.

19. The secondary battery manufacturing device of claim 16, wherein
the second spatter adsorption device comprises third and fourth magnetic field generating rods configured to generate the second magnetic field.

20. The secondary battery manufacturing device of claim 19, wherein
the direction of a third current applied to the third magnetic field generating rod is opposite to the direction of a fourth current applied to the fourth magnetic field generating rod.

21. The secondary battery manufacturing device of claim 19, wherein
at the center of the second opening, a magnetic field generated by the third magnetic field generating rod is offset by a magnetic field generated by the fourth magnetic field generating rod.
